(19) Europäisches Patentamt
European Patent Office
Office européen des brevets

(11) **EP 1 843 481 A1**

(12) **EUROPEAN PATENT APPLICATION**

(43) Date of publication:
**10.10.2007 Bulletin 2007/41**

(51) Int Cl.:
***H04B 1/707*** *(2006.01)*

(21) Application number: **07112889.6**

(22) Date of filing: **08.01.2004**

(84) Designated Contracting States:
**AT BE BG CH CY CZ DE DK EE ES FI FR GB GR HU IE IT LI LU MC NL PT RO SE SI SK TR**

(30) Priority: **10.01.2003 US 439284 P**

(62) Document number(s) of the earlier application(s) in accordance with Art. 76 EPC:
**04700894.1 / 1 582 008**

(71) Applicant: **INTERDIGITAL TECHNOLOGY CORPORATION**
**Wilmington, DE 19810 (US)**

(72) Inventors:
• **Pan, Kyle Jung-Lin**
**West Chester, PA 19382 (US)**
• **Huang, Yuejin**
**Holbrook, NY 11741 (US)**
• **Grieco, Donald M.**
**Manhassett, NY 11030 (US)**

(74) Representative: **Ahrengart, Kenneth**
**Awapatent AB**
**P.O. Box 45086**
**104 30 Stockholm (SE)**

Remarks:
This application was filed on 20 - 07 - 2007 as a divisional application to the application mentioned under INID code 62.

(54) **Generalized two-stage data estimation**

(57) There is disclosed a wireless transmit/receive unit (WTRU) configured to receive and sample wireless signals in a shared spectrum where the wireless signals comprise encoded symbols. The WTRU comprises a channel estimation device configured to process received signal samples to produce an estimate of a channel response of the received signals corresponding to a matrix. The channel estimation device is further configured to process the received signal samples to produce an estimate of noise variance of the received signals.

The WTRU also comprises a two stage data estimator comprising a first stage channel equalizer and a second stage despreader. The channel equalizer is configured to process received signal samples using the estimated channel response matrix and the estimate of noise variance to produce a spread signal estimate of the received signals. The despreader is configured to process the spread signal estimate of the received signals produced by the channel equalizer to recover encoded symbols of the received signals. A corresponding method is also disclosed.

*FIG. 2*

EP 1 843 481 A1

**Description**

FIELD OF INVENTION
The present invention relates to wireless communication systems. More particularly, the present invention is directed to data estimation in such systems.
BACKGROUND
In wireless systems, joint detection (JD) is used to mitigate intersymbol interference (ISI) and multiple-access interference (MAI). JD is characterized by good performance but high complexity. Even using approximate Cholesky or block Fourier transforms with Cholesky decomposition algorithms, the complexity of JD is still very high. When JD is adopted in a wireless receiver, its complexity prevents the receiver from being implemented efficiently. This evidences the need for alternative algorithms that are not only simple in implementation but also good in performance.
To overcome this problem, prior art receivers based on a channel equalizer followed by a code despreader have been developed. These types of receivers are called single user detection (SUD) receivers because, contrary to JD receivers, the detection process does not require the knowledge of channelization codes of other users. SUD tends to not exhibit the same performance as JD for most data rates of interest, even though its complexity is very low. Accordingly, there exists a need for low complexity high performance data detectors.
SUMMARY
Symbols are to be recovered from signals received in a shared spectrum. Codes of the signals received in the shared spectrum are processed using a block Fourier transform (FT), producing a code block diagonal matrix. A channel response of the received signals is estimated. The channel response is extended and modified to produce a block circulant matrix and a block FT is taken, producing a channel response block diagonal matrix. The code block diagonal matrix is combined with the channel response block diagonal matrix. The received signals are sampled and processed using the combined code block diagonal matrix and the channel response block diagonal matrix with a Cholesky algorithm. A block inverse FT is performed on a result of the Cholesky algorithm to produce spread symbols. The spread symbols are despread to recover symbols of the received signals.
BRIEF DESCRIPTION OF THE DRAWINGS
Figure 1 is a block diagram showing a two stage data detection.
Figure 2 is a block diagram of an embodiment of two-stage data detection.
Figure 3 is a block diagram of code assignment to reduce the complexity of two-stage data detection.
Figures 4A-4D are block diagrams of utilizing look-up tables to determine $\Lambda_R$.
DETAILED DESCRIPTION OF THE PREFERRED EMBODIMENT(S)
The present invention will be described with reference to the drawing figures where like numerals represent like elements throughout.
A two stage data estimator can be used in a wireless transmit/receive unit (WTRU) or base station, when all of the communications to be detected by the estimator experience a similar channel response. Although the following is described in conjunction with the preferred proposed third generation partnership project (3GPP) wideband code division multiple access (W-CDMA) communication system, it is applicable to other systems.

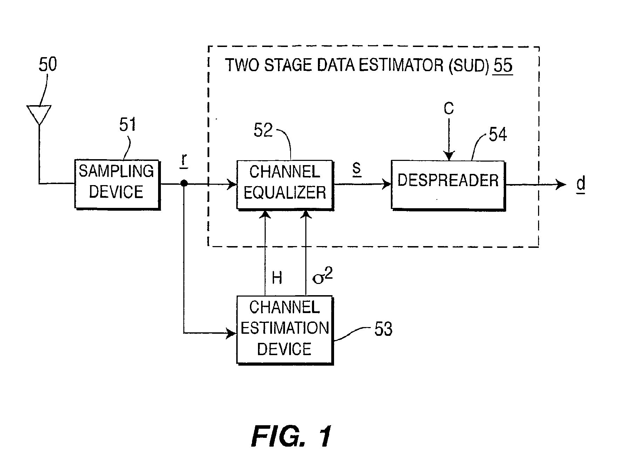

Figure 1 is a simplified block diagram of a receiver using a two stage data estimator 55. An antenna 50 or antenna array receives radio frequency signals. The signals are sampled by a sampling device 51, typically at the chip rate or at a multiple of the chip rate, producing a received vector $\underline{r}$ . A channel estimation device 53 using a reference signal, such as a midamble sequence or pilot code, estimates the channel response for the received signals as a channel response matrix H. The channel estimation device 53 also estimates the noise variance, $\sigma^2$.
The channel equalizer 52 takes the received vector $\underline{r}$ and equalizes it using the channel response matrix H and the noise variance ($\sigma^2$ , producing a spread symbol vector s . Using codes C of the received signals, a despreader 54 despreads the spread symbol vector $\underline{s}$ , producing the estimated symbols $\underline{d}$.
With joint detection (JD), a minimum mean square error (MMSE) formula with respect to the symbol vector $\underline{d}$ can be expressed as:

$$\hat{\underline{d}} = (A^H R_n^{-1} A + R_d^{-1})^{-1} A^H R_n^{-1} \underline{r},$$

Equation (1)

or

$$\hat{\underline{d}} = R_d A^H (A R_d A^H + R_n)^{-1} \underline{r},$$

## Equation (2)

$\hat{\underline{d}}$ is the estimate of $\underline{d}$, $\underline{r}$ is the received signal vector, A is the system matrix, $R_n$ is the covariance matrix of noise sequence, $R_d$ is the covariance matrix of the symbol sequence and the notation $(\cdot)^H$ denotes the comply conjugate transform (Hermitian) operation. The dimensions and structures of the above vectors and matrixes depend on specific system design. Usually, different systems have different system parameters such as frame structure, length of data field and length of delay spread.

The matrix A has the different values of dimensions for different systems and the dimensions of matrix A depend on the length of data field, number of codes, spreading factor and length of delay spread. By way of example, for the transmission of 8 codes with spreading factor 16 each, the matrix A has dimensions of 1032 by 488 for a WCDMA TDD system if burst type 1 is used and for delay spread of 57 chips long, while matrix A has dimensions of 367 by 176 for TD-SCDMA system for a delay spread of 16 chips long.

Assuming white noise and uncorrelated symbols with unity energy, $R_n = \sigma^2 I$ and $R_d = I$, where $I$ denotes the identity matrix. Substitution of these into Equations 1 and 2 results in:

$$\hat{\underline{d}} = (A^H A + \sigma^2 I)^{-1} A^H \underline{r},$$

## Equation (3)

or

$$\hat{\underline{d}} = A^H (A A^H + \sigma^2 I)^{-1} \underline{r}.$$

## Equation (4)

The received signal can be viewed as a composite signal, denoted by $\underline{s}$, passed through a single channel. The received signal $\underline{r}$ may be represented by $\underline{r} = H\underline{s}$, where H is the channel response matrix and $\underline{s}$ is the composite spread signal. H takes the form of:

$$\underline{H} = \begin{bmatrix} h_0 & & & & & \\ h_1 & h_0 & & & & \\ \cdot & h_1 & \cdot & & & \\ \cdot & \cdot & \cdot & \cdot & & \\ h_{W-1} & \cdot & & \cdot & \cdot & \\ & h_{W-1} & & & \cdot & \cdot \\ & & \cdot & & & \cdot & \cdot \\ & & & \cdot & & \cdot & h_0 \\ & & & & \cdot & & h_1 \\ & & & & & \cdot & \cdot \\ & & & & & & \cdot & \cdot \\ & & & & & & & h_{W-1} \end{bmatrix}$$

Equation (5)

In Equation (5), W is the length of the channel response, and is therefore equal to the length of the delay spread. Typically W=57 for W-CDMA time division duplex (TDD) burst type 1 and W=16 for time division synchronous CDMA (TD-SCDMA). The composite spread signal $\underline{s}$ can be expressed as $\underline{s} = C\underline{d}$, where the symbol vector $\underline{d}$ is:

$$\underline{d} = \left( d_1, d_2, ..., d_{KN_s} \right)^T ,$$

Equation (6)

and the code matrix C is:

$$C = \left[ C^{(1)}, C^{(2)}, ..., C^{(K)} \right]$$

Equation (7)

with:

$$C^{(k)} = \begin{bmatrix} c_1^{(k)} & & & & & \\ \cdot & & & & & \\ c_Q^{(k)} & & & & & \\ \cdot & c_1^{(k)} & & & & \\ & \cdot & & & & \\ & c_Q^{(k)} & \cdot & & & \\ & & \cdot & & & \\ & & & \cdot & & \\ & & & \cdot & c_1^{(k)} & \\ & & & & \cdot & \\ & & & & c_Q^{(k)} & \end{bmatrix}$$

Equation (8)

$Q$, $K$ and $N_s$ denote the spread factor (SF), the number of active codes and the number of symbols carried on each channelization code, respectively. $c_i^{(k)}$ is the $i^{th}$ element of the $k^{th}$ code. The matrix $C$ is a matrix of size $N_s \cdot Q$ by $N_s \cdot K$

Substitution of $A = HC$ into Equation (4) results in:

$$\hat{\underline{d}} = C^H H^H (HR_c H^H + \sigma^2 I)^{-1} \underline{r}$$

Equation (9)

$R_c = CC^H$. If $\hat{\underline{s}}$ denotes the estimated spread signal, Equation (9) can be expressed in two stages:

Stage 1:

$$\hat{\underline{s}} = H^H (HR_c H^H + \sigma^2 I)^{-1} \underline{r}$$

Equation (10)

Stage 2:

$$\hat{\underline{d}} = C^H \hat{\underline{s}}$$

Equation (11)

The first stage is the stage of generalized channel equalization. It estimates the spread signal $\underline{s}$ by an equalization process per Equation 10. The second stage is the despreading stage. The symbol sequence $\underline{d}$ is recovered by a despreading process per Equation 11.

The matrix $R_c$ in Equation 9 is a block diagonal matrix of the form:

$$R_C = \begin{bmatrix} R_0 & & & \\ & R_0 & & \\ & & O & \\ & & & R_0 \end{bmatrix},$$

<div align="right">Equation (12)</div>

The block $R_0$ in the diagonal is a square matrix of size $Q$. The matrix $R_c$ is a square matrix of size $N_s \cdot Q$.

Because the matrix $R_c$ is a block circular matrix, the block Fast Fourier transform (FFT) can be used to realize the algorithm. With this approach the matrix $R_c$ can be decomposed as:

$$R_c = F_{(Q)}^{-1} \Lambda_R F_{(Q)}$$

<div align="right">Equation (13)</div>

with

$$F_{(Q)} = F_{Ns} \otimes I_Q$$

<div align="center">Equation (14)</div>

$F_{Ns}$ is the $N_s$-point FFT matrix, $I_Q$ is the identity matrix of size Q and the notation $\otimes$ is the Kronecker product. By definition, the Kronecker product Z of matrix X and Y, $(Z = X \otimes Y)$ is:

$$Z = \begin{bmatrix} x_{11}Y & x_{12}Y & \cdots & x_{1N}Y \\ x_{21}Y & x_{21}Y & & x_{2N}Y \\ \vdots & & \ddots & \\ x_{M1}Y & x_{M1}Y & & x_{MN}Y \end{bmatrix}$$

<div align="right">Equation (15)</div>

$X_{m,n}$ is the $(m,n)^{th}$ element of matrix X. For each $F_{(Q)}$, a Ns-point FFT is performed Q times. $\Lambda_R$ is a block-diagonal matrix whose diagonal blocks are:
$F_{(Q)}Rc(:,l: Q)$. That is,

$$diag(\Lambda_R) = F_{(Q)}R_C(:,1:Q),$$

<div align="center">Equation (16)</div>

$R_c(:,1:Q)$ denotes the first Q columns of matrix $R_c$.

The block circular matrix can be decomposed into simple and efficient FFT components, making a matrix inverse more efficient and less complex. Usually, the large matrix inverse is more efficient when it is performed in the frequency domain rather than in a time domain. For this reason, it is advantage to use FFT and the use of a block circular matrix enables efficient FFT implementation. With proper partition, the matrix $H$ can be expressed as an approximate block circular matrix of the form:

$$H = \begin{bmatrix} H_0 & & & & & \\ H_1 & H_0 & & & & \\ H_2 & H_1 & & & & \\ H_{L-1} & H_2 & & & & \\ & H_{L-1} & & & & \\ & & O & & & \\ & & & H_0 & & \\ & & & H_1 & & \\ & & & H_2 & & \\ & & & H_{L-1} & & \end{bmatrix},$$

Equation (17)

where each $H_i$, $i = 0,1,...,L-1$ is a square matrix of size Q. L is the number of data symbols affected by the delay spread of propagation channel is expressed as:

$$L = \left\lceil \frac{Q + W - 1}{Q} \right\rceil.$$

Equation (18)

To enable block FFT decomposition, H can be extended and modified into an exactly block circular matrix of the form:

$$H_C = \begin{bmatrix} H_0 & & & & H_{L-1} & H_2 & H_1 \\ H_1 & H_0 & & & & H_{L-1} & H_2 \\ H_2 & H_1 & & & & & H_{L-1} \\ H_{L-1} & H_2 & & & & & \\ & H_{L-1} & & & & & \\ & & O & & & & \\ & & & H_0 & & & \\ & & & H_1 & H_0 & & \\ & & & H_2 & H_1 & H_0 & \\ & & & H_{L-1} & H_2 & H_1 & H_0 \end{bmatrix}$$

Equation (19)

The block circular matrix $H_c$ is obtained by expanding the columns of matrix H in Equation (17) by circularly down-shifting one element block successively.

The matrix $H_c$ can be decomposed by block FFT as:

$$H_C = F_{(Q)}^{-1} \Lambda_H F_{(Q)}$$

Equation (20)

$\Lambda_H$ is a block-diagonal matrix whose diagonal blocks are $F_{(Q)}H_c(:,1:Q)$, *as*

$$diag(\Lambda_H) = F_{(Q)} H_C(:,1:Q)$$

Equation (21)

$H_c(:,1:Q)$ denotes the first Q columns of matrix $H_c$. From Equation (20), $H_C^H$ can be defined as

$$H_C^H = F_{(Q)}^{-1} \Lambda_H^H F_{(Q)}$$

Equation (22)

Substituting matrix $R_c$ and $H_c$ into Equation 10, $\hat{\underline{s}}$ is obtained:
$$\hat{\underline{s}} = F_{(Q)}^{-1} \Lambda_H^H (\Lambda_H \Lambda_R \Lambda_H^H + \sigma^2 I)^{-1} F_{(Q)} \underline{r}$$

Equation (23)

For a zero forcing (ZF) solution, equation 19 is simplified to

$$\hat{\underline{s}} = F_{(Q)}^{-1} \Lambda_R^{-1} \Lambda_H^{-1} F_{(Q)} \underline{r}$$

Equation (24)

The matrix inverse in Equations (23) and (24) can be performed using Cholesky decomposition and forward and backward substitutions.

In a special case of K=SF, where (the number of active codes equals the spreading factor), the matrix $R_C$ becomes a scalar-diagonal matrix with identical diagonal elements equal to SF. In this case, Equations (10) and (11) reduce to:

$$\hat{\underline{s}} = H^H (HH^H + \frac{\sigma^2}{Q} I)^{-1} \underline{r}$$

Equation (25)

and

$$\hat{\underline{d}} = \tfrac{1}{Q} C^H \hat{\underline{s}}$$

$$\text{Equation (26)}$$

Equation (25) can also be expressed in the form of:

$$\hat{\underline{s}} = (H^H \dot{H} + \tfrac{\sigma^2}{Q} I)^{-1} H^H \underline{r}$$

$$\text{Equation (27)}$$

With FFT, Equations (25) and (27) can be realized by:

$$\hat{\underline{s}} = F^{-1} \Lambda_H^* (\Lambda_H \Lambda_H^* + \tfrac{\sigma^2}{Q} I)^{-1} F \underline{r}$$

$$\text{Equation (28)}$$

and

$$\hat{\underline{s}} = F^{-1} (\Lambda_H^* \Lambda_H + \tfrac{\sigma^2}{Q} I)^{-1} \Lambda_H^* F \underline{r}$$

$$\text{Equation (29)}$$

respectively. $\Lambda_H$ is a diagonal matrix whose diagonal is $F \cdot H(:,1)$ in which $H(:,1)$ denotes the first column of matrix H. The notation $(.)^*$ denotes conjugate operator.

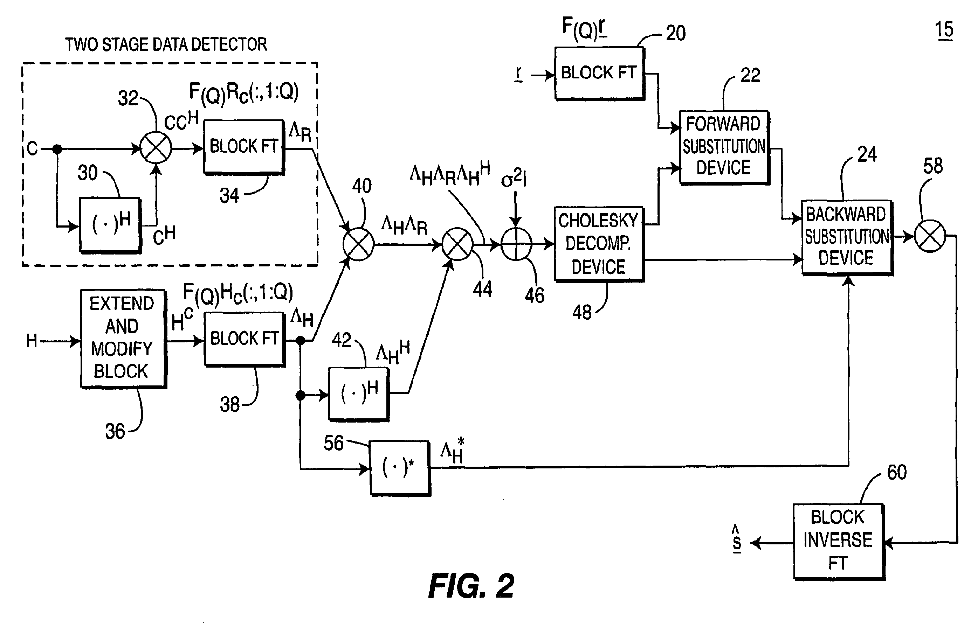

Figure 2 is a preferred block diagram of the channel equalizer 15. A code matrix C is input into the channel equalizer 15. A Hermitian device 30 takes a complex conjugate transpose of the code matrix C, $C^H$. The code matrix C and its Hermitian are multiplied by a multiplier 32, producing $CC^H$. A block FT performed on $CC^H$. producing block diagonal matrix $\Lambda_R$.

The channel response matrix H is extended and modified by an extend and modify device 36, producing $H^C$. A block FT 38 takes $H^c$ and produces block diagonal matrix $\Lambda_H$. A multiplier 40 multiplies $\Lambda_H$ and $\Lambda_R$ together, producing $\Lambda_H \Lambda_R$. A Hermitian device 42 takes the complex conjugate transpose of $\Lambda_H$, producing $\Lambda_H^H$ . A multiplier 44 multiplies $\Lambda_H^H$ to $\Lambda_H$, $\Lambda_R$, producing $\Lambda_H \Lambda_R \Lambda_H^H$, and an adder 46 adds to $\sigma^2 I$, producing $\Lambda_H \Lambda_R \Lambda_H^H + \sigma^2 I$.

A Cholesky decomposition device 48 produces a Cholesky factor. A block FT 20 takes a block FT of the received vector $\underline{r}$. Using the Cholesky factor and the FT of $\underline{r}$, forward and backward substitution are performed by a forward substitution device 22 and backward substitution device 24.

A conjugation device 56 takes the conjugate of $\Lambda_H$, producing $\Lambda_H^*$. The result of backward substitution is multiplied at multiplier 58 to $\Lambda_H^*$. A block inverse FT 60 takes a block inverse FT of the multiplied result, producing $\hat{\underline{s}}$.

According to another embodiment of the present invention, an approximate solution is provided in which the generalized two-stage data detection process is a block-diagonal-approximation. The block-diagonal-approximation includes off-diagonal entries as well as the diagonal entries in the approximation process.

As an example, the case of four channelization codes is considered. $R_o$, a combination of four channelization codes, comprises a constant block diagonal part, which does not vary with the different combinations of the codes, and an edge part which changes with the combinations. In general $R_o$ has the structure of:

$$R_0 = \begin{bmatrix} c & c & x & x & & & & & \\ c & c & x & x & & & & & \\ x & x & c & c & & & & & \\ x & x & c & c & & & & & \\ & & & & \ddots & & & & \\ & & & & & \ddots & & & \\ & & & & & & c & c & x & x \\ & & & & & & c & c & x & x \\ & & & & & & x & x & c & c \\ & & & & & & x & x & c & c \end{bmatrix} \qquad \text{Equation (30)}$$

where elements denoted as c represent constants and are always equal to the number of channelization codes, i.e., $c = K$. The elements designated as x represent some variables whose values and locations vary with different combinations of channelization codes. Their locations vary following certain patterns depending on combinations of codes. As a result only a few of them are non-zero. When code power is considered and is not unity power, the element c equals the total power of transmitted codes. A good approximation of the matrix $R_0$ is to include the constant part and ignore the variable part as:

$$\hat{R}_0 = \begin{bmatrix} c & c & & & & & & \\ c & c & & & & & & \\ & & c & c & & & & \\ & & c & c & & & & \\ & & & & O & & & \\ & & & & & O & & \\ & & & & & & c & c \\ & & & & & & c & c \\ & & & & & & & & c & c \\ & & & & & & & & c & c \end{bmatrix}$$

$$\text{Equation (31)}$$

In this case, the approximation $\hat{R}_0$ contains only a constant part. $\hat{R}_0$ depends only on the number of active codes regardless of which codes are transmitted, and $\hat{R}_C$ can be decomposed as shown is Equation (13). The block diagonal of $\Lambda_R$ or $F_{(Q)}\hat{R}_C(:,1:Q)$ can be pre-calculated using an FFT for different numbers of codes and stored as a look-up table. This reduces the computational complexity by not computing $F(Q)R_C(:,1:Q)$. In the case, that code power is considered and is not unity power, the element c becomes total power of active codes, (i.e., $c=P_T$ in which $P_T$ is the total power of active codes). The matrix $\hat{R}_0$ can be expressed as

$$\hat{R}_0 = P_{avg} \cdot \begin{bmatrix} K & K & & & & & & & & \\ K & K & & & & & & & & \\ & & K & K & & & & & & \\ & & K & K & & & & & & \\ & & & & O & & & & & \\ & & & & & O & & & & \\ & & & & & & K & K & & \\ & & & & & & K & K & & \\ & & & & & & & & K & K \\ & & & & & & & & K & K \end{bmatrix}, \qquad \text{Equation (32)}$$

where $P_{avg}$ is the average code power obtained by $P_{avg} = \dfrac{P_T}{K}$. In this case, a scaling $P_{avg}$ should be applied in the process.

Other variants of block-diagonal approximation method can be derived by including more entries other than the constant block-diagonal part. This improves performance but entails more complexity because by including variable entries the FFT for $F_{(Q)}R_c$ (:,1 : Q) has to be now recalculated as needed if the codes change. The use of more entries enhances the exact solution as all of the off-diagonal entries are included for processing.

At a given number of channelization codes, one can derive the code sets for different combinations of channelization codes that have common constant part of the correlation matrix whose values are equal to the number of channelization codes, or the total power of channelization codes when the code does not have unity code power. To facilitate the low complexity implementation, the assignment of channelization codes or resource units can be made following the rules that a code set is randomly picked among the code sets that have common constant part and those codes in the picked code set are assigned. For example of assignment of four codes, the code sets [1,2,3,4], [5,6,7,8], [9,10,11,12], .... have the common constant part in their correlation matrix. When channel assignment of four codes is made, one of those code sets should be used for optimal computational efficiency.

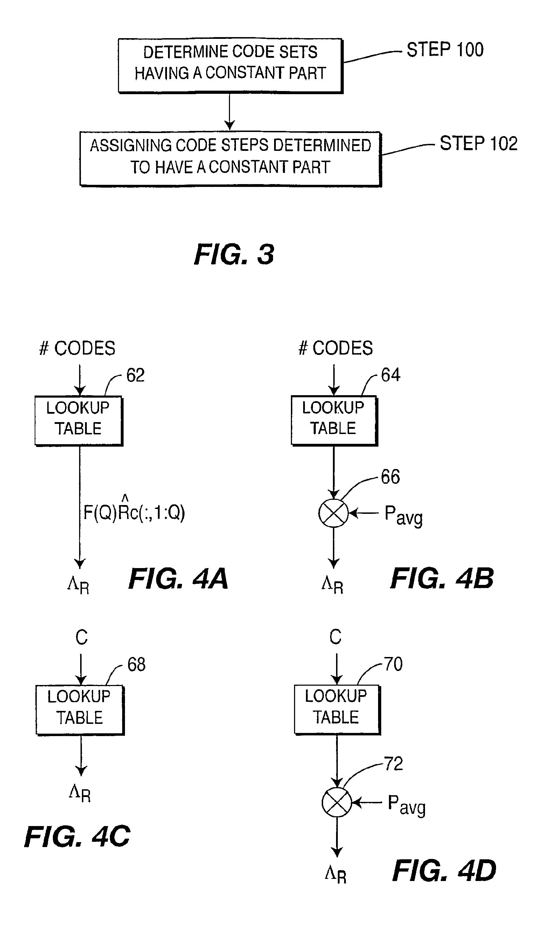

Figure 3 is a flow diagram of such a channel code assignment. Codes sets having a constant part are determined, step 100. When assigning codes, the code sets having the constant part are used, step 102.

Figures 4A, 4B, 4C and 4D are illustrations of preferred circuits for reducing the complexity in calculating $\Delta_R$. In Figure 4A, the number of codes processed by the two stage data detector are put in a look-up table 62 and the $\Lambda_R$ associated with that code number is used. In Figure 4B, the number of codes processed by the two stage data detector are put in a look-up table 64 and an unscaled $\Lambda_R$ is produced. The unscaled $\Lambda_R$ is scaled, such as by a multiplier 66 by $P_{avg}$, producing $\Lambda_R$.

In Figure 4C, the code matrix C or code identifier is input into a look-up table 68. Using the look-up table 68, the $\Lambda_R$ is determined. The unscaled $\Lambda_R$ is scaled, such as by a multiplier 72 by $P_{avg}$, producing $\Lambda_R$. In Figure 4D, the code matrix C or code identifier is input into a look-up table 70, producing an unscaled $\Lambda_R$.

ITEMIZED LIST OF EMBODIMENTS

1. A method for recovering symbols from signals received in a shared spectrum, the method comprising:

processing codes of the signals received in the shared spectrum using a block Fourier transform (FT) and producing a code block diagonal matrix;
estimating a channel response of the received signals;
extending and modifying the channel response to produce a block circulant matrix and taking a block FT and producing a channel response block diagonal matrix;
combining the code block diagonal matrix and the channel response block diagonal matrix;
sampling the received signals;

processing the received signal using the combined code block diagonal matrix and the channel response block diagonal matrix with a Cholesky algorithm;
performing a block inverse FT on a result of the Cholesky algorithm to produce spread symbols; and
despreading the spread symbols to recover symbols of the received signals.

2. The method of item 1 wherein the Cholesky algorithm includes determining a Cholesky factor and performing forward and backward substitution.

3. The method of item 1 wherein the combining the code block diagonal matrix and the channel response block diagonal matrix includes adding factor of the noise variance multiplied with an identity matrix.

4. The method of item 1 wherein the code block diagonal matrix is produced by multiplying a code matrix with a complex conjugate transpose of the code matrix and taking a block FT of a result of the multiplying.

5. The method of item 1 wherein the code block diagonal matrix is produced by inputting a number of codes of interest into a look-up table.

6. The method of item 1 wherein the code block diagonal matrix is produced by inputting a number of codes of interest into a look-up table and scaling a resulting diagonal block matrix from the look-up table by an average power level.

7. The method of item 1 wherein the code block diagonal matrix is produced by inputting code identifiers of the received signals into a look-up table.

8. The method of item 1 wherein the code block diagonal matrix is produced by inputting code identifiers of the received signals into a look-up table and scaling a resulting diagonal block matrix from the look-up table by an average power level.

9. The method of item 1 wherein the code block diagonal matrix is produced by inputting codes of the received signal into a look-up table.

10. The method of item 1 wherein the code block diagonal matrix is produced by inputting inputing codes of the received signal into a look-up table and scaling a resulting diagonal block matrix from the look-up table by an average power level.

11. A wireless transmit/receive unit (WTRU) for use in recovering symbols from signals received in a shared spectrum, the WTRU comprising:

means for processing codes of the signals received in the shared spectrum using a block Fourier transform (FT) and producing a code block diagonal matrix;
means for estimating a channel response of the received signals;
means for extending and modifying the channel response to produce a block circulant matrix and taking a block FT and producing a channel response block diagonal matrix;
means for combining the code block diagonal matrix and the channel response block diagonal matrix;
means for sampling the received signals;
means for processing the received signal using the combined code block diagonal matrix and the channel response block diagonal matrix with a Cholesky algorithm;
means for performing a block inverse FT on a result of the Cholesky algorithm to produce spread symbols; and
means for despreading the spread symbols to recover symbols of the received signals.

12. The WTRU of item 11 wherein the Cholesky algorithm includes determining a Cholesky factor and performing forward and backward substitution.

13. The WTRU of item 11 wherein the combining the code block diagonal matrix and the channel response block diagonal matrix includes adding factor of the noise variance multiplied with an identity matrix.

14. The WTRU of item 11 wherein the code block diagonal matrix is produced by multiplying a code matrix with a complex conjugate transpose of the code matrix and taking a block FT of a result of the multiplying.

15. The WTRU of item 11 wherein the code block diagonal matrix is produced by inputting a number of codes of interest into a look-up table.

16. The WTRU of item 11 wherein the code block diagonal matrix is produced by inputting a number of codes of interest into a look-up table and scaling a resulting diagonal block matrix from the look-up table by an average power level.

17. The WTRU of item 11 wherein the code block diagonal matrix is produced by inputting code identifiers of the received signals into a look-up table.

18. The WTRU of item 11 wherein the code block diagonal matrix is produced by inputting code identifiers of the received signals into a look-up table and scaling a resulting diagonal block matrix from the look-up table by an average power level.

19. The WTRU of item 11 wherein the code block diagonal matrix is produced by inputting codes of the received signal into a look-up table.

20. The WTRU of item 11 wherein the code block diagonal matrix is produced by inputting inputing codes of the received signal into a look-up table and scaling a resulting diagonal block matrix from the look-up table by an average power level.

31. A wireless transmit/receive unit (WTRU) for use in recovering symbols from signals received in a shared spectrum, the WTRU comprising:

a block Fourier transform (FT) device for processing codes of the signals received in the shared spectrum using a block FT and producing a code block diagonal matrix;
a channel estimation device for estimating a channel response of the received signals;
an extending and modifying block for extending and modifying the channel response to produce a block circulant matrix and taking a block FT and producing a channel response block diagonal matrix;
a circuit for combining the code block diagonal matrix and the channel response block diagonal matrix;
a sampling device for sampling the received signals;
a Cholesky decomposition device and forward and backward substitution devices for processing the received signal using the combined code block diagonal matrix and the channel response block diagonal matrix with a Cholesky algorithm;
an inverse block FT device for performing a block inverse FT on an output of the backward substitution device to produce spread symbols; and
a despreader for despreading the spread symbols to recover symbols of the received signals.

32. The WTRU of item 31 wherein the circuit for combining comprises a two multipliers.

33. The WTRU of item 31 wherein the circuit for combining includes adding factor of the noise variance multiplied with an identity matrix.

34. The WTRU of item 31 further comprising a Hermitian device and a multiplier for multiplying a code matrix with a complex conjugate transpose of the code matrix.

35. The WTRU of item 31 further comprising a look-up table wherein the code block diagonal matrix is produced by inputting a number of codes of interest into a look-up table.

36. The WTRU of item 31 comprising a look-up table and a multiplier wherein the code block diagonal matrix is produced by inputting a number of codes of interest into a look-up table and multiplying a resulting diagonal block matrix from the look-up table by an average power level.

37. The WTRU of item 31 further comprising a look-up table wherein the code block diagonal matrix is produced by inputting code identifiers of the received signals into a look-up table.

38. The WTRU of item 31 comprising a look-up table and a multiplier wherein the code block diagonal matrix is produced by inputting code identifiers of the received signals into a look-up table and multiplying a resulting diagonal block matrix from the look-up table by an average power level.

39. The WTRU of item 31 further comprising a look-up table wherein the code block diagonal matrix is produced by inputting codes of the received signal into a look-up table.

40. The WTRU of item 31 comprising a look-up table and a multiplier wherein the code block diagonal matrix is produced by inputting inputting codes of the received signal into a look-up table and multiplying a resulting diagonal block matrix from the look-up table by an average power level.

51. A base station for use in recovering symbols from signals received in a shared spectrum, the base station comprising:

means for processing codes of the signals received in the shared spectrum using a block Fourier transform (FT) and producing a code block diagonal matrix;
means for estimating a channel response of the received signals;
means for extending and modifying the channel response to produce a block circulant matrix and taking a block FT and producing a channel response block diagonal matrix;
means for combining the code block diagonal matrix and the channel response block diagonal matrix;
means for sampling the received signals;
means for processing the received signal using the combined code block diagonal matrix and the channel response block diagonal matrix with a Cholesky algorithm;
means for performing a block inverse FT on a result of the Cholesky algorithm to produce spread symbols; and
means for despreading the spread symbols to recover symbols of the received signals.

52. The base station of item 51 wherein the Cholesky algorithm includes determining a Cholesky factor and performing forward and backward substitution.

53. The base station of item 51 wherein the combining the code block diagonal matrix and the channel response block diagonal matrix includes adding factor of the noise variance multiplied with an identity matrix.

54. The base station of item 51 wherein the code block diagonal matrix is produced by multiplying a code matrix with a complex conjugate transpose of the code matrix and taking a block FT of a result of the multiplying.

55. The base station of item 51 wherein the code block diagonal matrix is produced by inputting a number of codes of interest into a look-up table.

56. The base station of item 51 wherein the code block diagonal matrix is produced by inputting a number of codes of interest into a look-up table and scaling a resulting diagonal block matrix from the look-up table by an average power level.

57. The base station of item 51 wherein the code block diagonal matrix is produced by inputting code identifiers of the received signals into a look-up table.

58. The base station of item 51 wherein the code block diagonal matrix is produced by inputting code identifiers of the received signals into a look-up table and scaling a resulting diagonal block matrix from the look-up table by an average power level.

59. The base station of item 51 wherein the code block diagonal matrix is produced by inputting codes of the received signal into a look-up table.

60. The base station of item 51 wherein the code block diagonal matrix is produced by inputting inputting codes of the received signal into a look-up table and scaling a resulting diagonal block matrix from the look-up table by an average power level.

61. A base station for use in recovering symbols from signals received in a shared spectrum, the base station comprising:

a block Fourier transform (FT) device for processing codes of the signals received in the shared spectrum using a block FT and producing a code block diagonal matrix;
a channel estimation device for estimating a channel response of the received signals;
an extending and modifying block for extending and modifying the channel response to produce a block circulant matrix and taking a block FT and producing a channel response block diagonal matrix;
a circuit for combining the code block diagonal matrix and the channel response block diagonal matrix;
a sampling device for sampling the received signals;
a Cholesky decomposition device and forward and backward substitution devices for processing the received signal using the combined code block diagonal matrix and the channel response block diagonal matrix with a Cholesky algorithm;
an inverse block FT device for performing a block inverse FT on an output of the backward substitution device to produce spread symbols; and
a despreader for despreading the spread symbols to recover symbols of the received signals.

62. The base station of item 61 wherein the circuit for combining comprises a two multipliers.

63. The base station of item 61 wherein the circuit for combining includes adding factor of the noise variance multiplied with an identity matrix.

64. The base station of item 61 further comprising a Hermitian device and a multiplier for multiplying a code matrix with a complex conjugate transpose of the code matrix.

65. The base station of item 61 further comprising a look-up table wherein the code block diagonal matrix is produced by inputting a number of codes of interest into a look-up table.

66. The base station of item 61 comprising a look-up table and a multiplier wherein the code block diagonal matrix is produced by inputting a number of codes of interest into a look-up table and multiplying a resulting diagonal block matrix from the look-up table by an average power level.

67. The base station of item 61 further comprising a look-up table wherein the code block diagonal matrix is produced by inputting code identifiers of the received signals into a look-up table.

68. The base station of item 61 comprising a look-up table and a multiplier wherein the code block diagonal matrix is produced by inputting code identifiers of the received signals into a look-up table and multiplying a resulting diagonal block matrix from the look-up table by an average power level.

69. The base station of item 61 further comprising a look-up table wherein the code block diagonal matrix is produced by inputting codes of the received signal into a look-up table.

70. The base station of item 61 comprising a look-up table and a multiplier wherein the code block diagonal matrix is produced by inputting inputting codes of the received signal into a look-up table and multiplying a resulting diagonal block matrix from the look-up table by an average power level.

**Claims**

1. A wireless transmit/receive unit (WTRU) configured to receive (50) and sample (51) wireless signals in a shared spectrum where the wireless signals comprise encoded symbols, the WTRU **characterized by**:

   a channel estimation device (53) configured to process received signal samples to produce an estimate of a channel response of the received signals corresponding to a matrix H;

   said channel estimation device (53) further configured to process the received signal samples to produce an estimate of noise variance $\sigma^2$ of the received signals;
   a two stage data estimator (55) comprising a first stage channel equalizer (52) and a second stage despreader (54);
   said channel equalizer (52) configured to process received signal samples using the estimated channel response matrix H and the estimate of noise variance $\sigma^2$ to produce a spread signal estimate of the received signals; and
   said despreader (54) configured to process the spread signal estimate of the received signals produced by said channel equalizer to recover encoded symbols of the received signals.

**2.** The WTRU of claim 1 wherein said channel equalizer (52) includes:

means (34) for processing codes of the signals received in a shared spectrum using a block Fourier transform (FT) and producing a code block diagonal matrix;

means (36, 38) for extending and modifying the channel response matrix H to produce a channel response block diagonal matrix;

means (40, 42, 44, 46) for combining the code block diagonal matrix and the channel response block diagonal matrix;

means (48, 20, 22, 24, 58) for processing the received signal samples using the combined code block diagonal matrix and the channel response block diagonal matrix with the noise variance $\sigma^2$ and a Cholesky algorithm; and

means (60) for performing a block inverse FT on a result of the Cholesky algorithm to produce the spread signal estimate of the received signals.

**3.** The WTRU of claim 2 wherein said means (48, 20, 22, 24, 58) for processing the received signal samples using the combined code block diagonal matrix and the channel response block diagonal matrix with the noise variance $\sigma^2$ and a Cholesky algorithm includes means (46) for adding a factor of the noise variance multiplied with an identity matrix.

**4.** The WTRU of claim 2 or 3 wherein said means (34) for processing codes of the signals received in a shared spectrum using a block Fourier transform (FT) and producing a code block diagonal matrix includes a Hermitian device (30) and a multiplier (32) for multiplying a code matrix with a complex conjugate transpose of the code matrix.

**5.** The WTRU of claim 1, 2, 3 or 4 wherein said channel equalizer (52) includes a look-up table wherein the code block diagonal matrix is produced by inputting a number of codes of interest, code identifiers of the received signals or codes of the received signal into the look-up table.

**6.** The WTRU of claim 1, 2, 3 or 4 wherein said channel equalizer (52) includes a look-up table and a multiplier wherein the code block diagonal matrix is produced by inputting a number of codes of interest, code identifiers of the received signals or codes of the received signal into the look-up table and multiplying a resulting diagonal block matrix from the look-up table by an average power level.

**7.** The WTRU of claim 1, 2, 3, 4, 5, 6 or 7 configured as a base station.

**8.** A method for a wireless transmit/receive unit (WTRU) that receives and samples wireless signals in a shared spectrum where the wireless signals comprise encoded symbols, the method **characterized by**:

processing received signal samples to produce an estimate of a channel response of the received signals corresponding to a matrix H;

processing the received signal samples to produce an estimate of noise variance $\sigma^2$ of the received signals;

using a two stage data estimator (55) comprising a first stage channel equalizer (52) and a second stage despreader (54);

using said channel equalizer (52) to process received signal samples using the estimated channel response matrix H and the estimate of noise variance $\sigma^2$ **to** produce a spread signal estimate of the received signals; and

using said despreader (54) to process the spread signal estimate of the received signals produced by said channel equalizer to recover encoded symbols of the received signals.

**9.** The method of claim 8 wherein using said channel equalizer (52) includes:

processing codes of the signals received in a shared spectrum using a block Fourier transform (FT) and producing a code block diagonal matrix;

extending and modifying the channel response matrix H to produce a channel response block diagonal matrix;

combining the code block diagonal matrix and the channel response block diagonal matrix;

processing the received signal samples using the combined code block diagonal matrix and the channel response block diagonal matrix with the noise variance $\sigma^2$ and a Cholesky algorithm; and

performing a block inverse FT on a result of the Cholesky algorithm to produce the spread signal estimate of the received signals.

**10.** The method of claim 9 wherein the processing of the received signal samples using the combined code block diagonal matrix and the channel response block diagonal matrix with the noise variance $\sigma^2$ and a Cholesky algorithm includes adding a factor of the noise variance multiplied with an identity matrix.

11. The method of claim 9 or 10 wherein the processing of codes of the signals received in a shared spectrum using a block Fourier transform (FT) and producing of a code block diagonal matrix includes multiplying a code matrix with a complex conjugate transpose of the code matrix.

12. The method of claim 8, 9, 10 or 11 where said channel equalizer (52) includes a look-up table wherein the code block diagonal matrix is produced by inputting a number of codes of interest, code identifiers of the received signals or codes of the received signal into the look-up table.

13. The method of claim 8, 9, 10 or 11 where said channel equalizer (52) includes a look-up table and a multiplier wherein the code block diagonal matrix is produced by inputting a number of codes of interest, code identifiers of the received signals or codes of the received signal into the look-up table and multiplying a resulting diagonal block matrix from the look-up table by an average power level.

**FIG. 1**

**FIG. 2**

TWO STAGE DATA DETECTOR

$F_{(Q)}R_c(:,1:Q)$

$F_{(Q)}\underline{r}$ — 20

$CC^H$

32

30

$(\cdot)^H$

$C^H$

BLOCK FT

34

$\Lambda_R$

$\underline{r}$ → BLOCK FT

FORWARD SUBSTITUTION DEVICE — 22

40

$\Lambda_H\Lambda_R$

$\Lambda_H\Lambda_R\Lambda_H^H$ $\sigma^2 I$

44 46

CHOLESKY DECOMP. DEVICE

48

BACKWARD SUBSTITUTION DEVICE — 24

58

15

EXTEND AND MODIFY BLOCK

$H^C$

36

$F_{(Q)}H_c(:,1:Q)$

BLOCK FT

38

$\Lambda_H$

42

$(\cdot)^H$

$\Lambda_H^H$

56

$(\cdot)^*$

$\Lambda_H^*$

$\hat{\underline{s}}$ ← BLOCK INVERSE FT — 60

H →

EP 1 843 481 A1

DETERMINE CODE SETS
HAVING A CONSTANT PART ——— STEP 100

ASSIGNING CODE STEPS DETERMINED
TO HAVE A CONSTANT PART ——— STEP 102

## FIG. 3

# CODES

$62$

LOOKUP
TABLE

$F(Q)\hat{R}c(:,1:Q)$

$\Lambda_R$

## FIG. 4A

# CODES

$64$

LOOKUP
TABLE

$66$

$\otimes$ ← $P_{avg}$

$\Lambda_R$

## FIG. 4B

C

$68$

LOOKUP
TABLE

$\Lambda_R$

## FIG. 4C

C

$70$

LOOKUP
TABLE

$72$

$\otimes$ ← $P_{avg}$

$\Lambda_R$

## FIG. 4D

**European Patent Office**

**EUROPEAN SEARCH REPORT**

Application Number

EP 07 11 2889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/063779 A (INTERDIGITAL TECH CORP [US]) 15 August 2002 (2002-08-15) | 8 | INV. H04B1/707 |
| Y | * paragraph [0021] - paragraph [0044]; figure 2 * | 1 | |
| | ----- | | |
| Y | WO 02/089346 A (INTERDIGITAL TECH CORP [US]) 7 November 2002 (2002-11-07) | 1 | |
| A | * paragraphs [0022], [0032] * | 2-7,9-13 | |
| | ----- | | |

TECHNICAL FIELDS SEARCHED (IPC)

H04B

The present search report has been drawn up for all claims

| Place of search | Date of completion of the search | Examiner |
|---|---|---|
| Munich | 30 August 2007 | Giglietto, Massimo |

EPO FORM 1503 03.82 (P04C01)

**ANNEX TO THE EUROPEAN SEARCH REPORT
ON EUROPEAN PATENT APPLICATION NO.**

EP 07 11 2889

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2007

| Patent document cited in search report | | Publication date | Patent family member(s) | | Publication date |
|---|---|---|---|---|---|
| WO 02063779 | A | 15-08-2002 | AT | 330372 T | 15-07-2006 |
| | | | AU | 2002243695 A1 | 19-08-2002 |
| | | | CA | 2437660 A1 | 15-08-2002 |
| | | | CN | 1502175 A | 02-06-2004 |
| | | | DE | 60212334 T2 | 31-05-2007 |
| | | | EP | 1358718 A2 | 05-11-2003 |
| | | | ES | 2263771 T3 | 16-12-2006 |
| | | | HK | 1064526 A1 | 15-06-2007 |
| | | | JP | 3897302 B2 | 22-03-2007 |
| | | | JP | 2004523957 T | 05-08-2004 |
| | | | JP | 3948570 B2 | 25-07-2007 |
| | | | JP | 2007053807 A | 01-03-2007 |
| | | | MX | PA03007025 A | 18-11-2003 |
| | | | NO | 20033476 A | 18-09-2003 |
| | | | TW | 231657 B | 21-04-2005 |
| | | | TW | 267263 B | 21-11-2006 |
| | | | TW | 271050 B | 11-01-2007 |
| | | | US | 2003043767 A1 | 06-03-2003 |
| | | | US | 2002159415 A1 | 31-10-2002 |
| | | | US | 2003035392 A1 | 20-02-2003 |
| WO 02089346 | A | 07-11-2002 | AT | 346427 T | 15-12-2006 |
| | | | BR | 0209411 A | 06-07-2004 |
| | | | CA | 2445956 A1 | 07-11-2002 |
| | | | CN | 1505871 A | 16-06-2004 |
| | | | DE | 60216274 T2 | 28-06-2007 |
| | | | EP | 1391048 A1 | 25-02-2004 |
| | | | ES | 2275002 T3 | 01-06-2007 |
| | | | JP | 2005508103 T | 24-03-2005 |
| | | | JP | 2007060686 A | 08-03-2007 |
| | | | KR | 20050090016 A | 09-09-2005 |
| | | | KR | 20070061924 A | 14-06-2007 |
| | | | MX | PA03009956 A | 29-01-2004 |
| | | | NO | 20034813 A | 29-12-2003 |
| | | | TW | 261990 B | 11-09-2006 |
| | | | TW | 270263 B | 01-01-2007 |
| | | | US | 2003021335 A1 | 30-01-2003 |
| | | | US | 2003026236 A1 | 06-02-2003 |
| | | | US | 2003026325 A1 | 06-02-2003 |

EPO FORM P0459

For more details about this annex : see Official Journal of the European Patent Office, No. 12/82